# EUROPEAN PATENT APPLICATION

(11) **EP 4 156 013 A1**
(43) Date of publication of application: **29.03.2023**
(21) Application number: 22160461.4
(22) Date of filing: 07.03.2022
(51) Int. Cl.: G06F 30/12, G06F 111/20, G06F 111/12, G06F 111/02

(54) **DESIGN SUPPORT DEVICE, DESIGN SUPPORT SYSTEM, DESIGN SUPPORT METHOD, PROGRAM, AND STORAGE MEDIUM**

(30) Priority: 22.09.2021 JP 2021154629
(71) Applicant: KABUSHIKI KAISHA TOSHIBA, Minato-ku Tokyo 105-0023 (JP)
(72) Inventor: SHIMIZU, Akihisa, Tokyo, 105-0023 (JP)
(74) Representative: Hoffmann Eitle

(57) **Abstract**

According to one embodiment, a design support device (10) refers to a database. The database stores a graph structure (101). The graph structure includes a specification item (130), a unit item (140), a first item (110), and a second item (120). The unit item is of a unit included in a product. The unit item is associated with the specification item. The first item is tied to a system simulation model and associated with the unit item. The second item is tied to a three-dimensional model and associated with the unit item and the first item. The design support device transmits a first notification to a first processing device (31) when the three-dimensional model is updated. The first processing device is tied to the first item. The design support device transmits a second notification to a second processing device (32) when the system simulation model is updated. The second processing device is tied to the second item.

## Description

### FIELD

Embodiments described herein relate generally to a design support device, a design support system, a design support method, program, and a storage medium.

### BACKGROUND

There are cases where a system simulation model, a three-dimensional model, and the like are generated when designing a product. It is desirable to develop technology that can support such design work.

### BRIEF DESCRIPTION OF THE DRAWINGS

FIG. 1 is a schematic view showing a design support system according to an embodiment;
FIG. 2 is a schematic view illustrating a graph structure and a first user interface;
FIG. 3 is an example of a system simulation model;
FIG. 4 is a schematic view illustrating a second user interface;
FIG. 5 is a schematic view illustrating data attached to the first item;
FIG. 6 is an example of a three-dimensional model;
FIG. 7 is a schematic view illustrating a third user interface;
FIG. 8A and FIG. 8B are schematic views illustrating data attached to the specification items;
FIG. 9 is a schematic view illustrating data attached to the specification items;
FIG. 10 is a schematic view illustrating data attached to the unit item;
FIG. 11 is a flowchart showing processing according to the design support system according to the embodiment;
FIG. 12 is a flowchart showing processing according to the design support system according to the embodiment;
FIG. 13 is a schematic view illustrating the user interface;
FIG. 14 is a schematic view illustrating data attached to the second item;
FIG. 15 is a schematic view showing a specific example of a graph structure; and
FIG. 16 is a schematic view showing a hardware configuration.

### DETAILED DESCRIPTION

According to one embodiment, a design support device refers to a database. The database stores a graph structure. The graph structure includes a specification item, a unit item, a first item, and a second item. The specification item is of a specification of a product. The unit item is of a unit included in the product. The unit item is associated with the specification item. The first item is tied to a system simulation model and associated with the unit item. The system simulation model includes a relationship between input and output of the unit. The second item is tied to a three-dimensional model and associated with the unit item and the first item. The three-dimensional model includes a three-dimensional configuration of the unit. The design support device transmits a first notification to a first processing device when the three-dimensional model is updated. The first processing device is tied to the first item. The design support device transmits a second notification to a second processing device when the system simulation model is updated. The second processing device is tied to the second item.

Various embodiments will be described hereinafter with reference to the accompanying drawings.

In the specification and drawings, components similar to those described or illustrated in a drawing thereinabove are marked with like reference numerals, and a detailed description is omitted as appropriate.

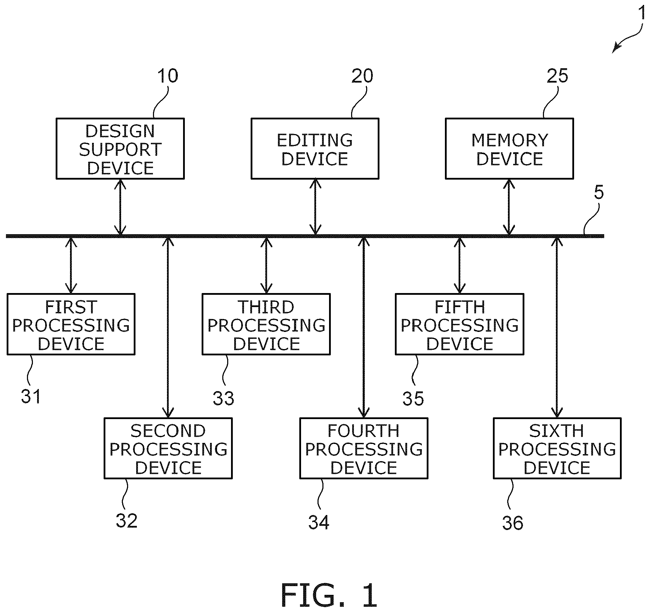

FIG. 1 is a schematic view showing a design support system according to an embodiment.

As shown in FIG. 1, the design support system 1 includes a design support device 10, an editing device 20, and a memory device 25. The design support device 10, the editing device 20, and the memory device 25 are connected to each other via a network 5.

The design support device 10 can access a database that stores a graph structure related to a product. The database is stored in the memory device 25. Information of the product is described in the graph structure. The graph structure is drawn using the editing device 20.

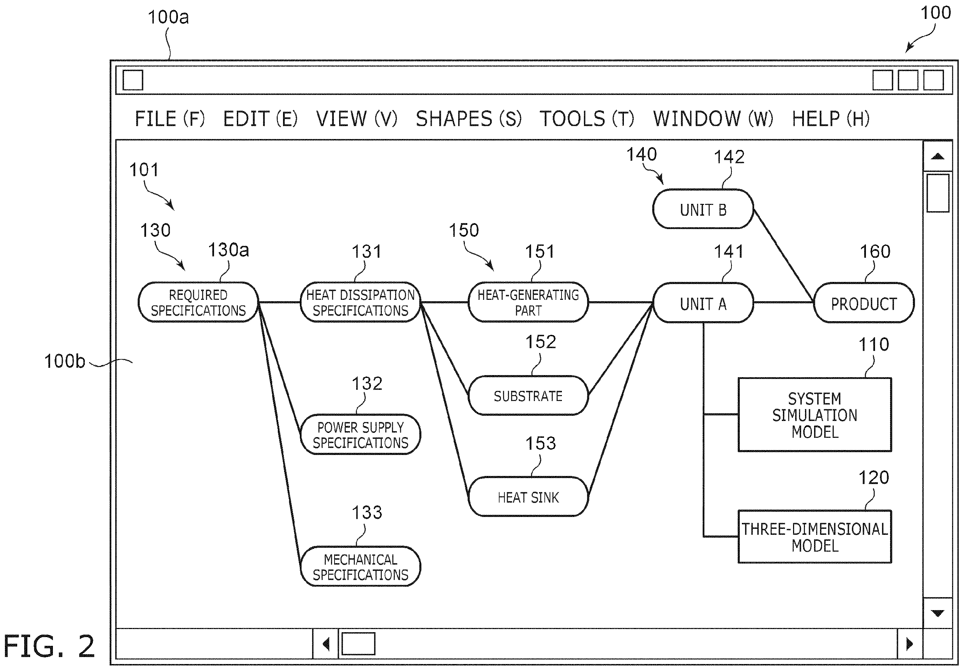

FIG. 2 is a schematic view illustrating a graph structure and a first user interface.

The graph structure 101 shown in FIG. 2 includes nodes, and edges that connect the nodes to each other. Specifically, the graph structure 101 includes a first item 110, a second item 120, a specification item 130, and a unit item 140.

The specification items 130 include specifications of the product. The specifications include, for example, functions, performance, configurations, prices, standards, etc. In the example of FIG. 2, the multiple specification items 130 include specification items 131 to 133. The specification item 131 is "heat dissipation specifications" related to the heat dissipation specification of the product. The specification item 132 is "power supply specifications" related to the power supply specification of the product. The specification item 133 is "mechanical specifications" related to the mechanical specification of the product.

As in the example of FIG. 2, a subordinate relationship may be set between the multiple specification items 130. The specification items 131 to 133 are subordinate to a specification item 130a. The specification item 130a includes the required specifications. The specification items 131 to 133 are concretized specifications of the specification item 130a.

Generally, a product includes multiple units. The unit items 140 include units that are included in the product. The unit items 140 are associated with the specification items 130. Generally, a unit includes multiple parts. The graph structure may include part items of parts. In the example of FIG. 2, one unit item 140 is associated with one specification item 130 via multiple part items 150 that include part items 151 to 153.

The graph structure may further include a product item 160 of a product. The product item 160 is associated with the multiple unit items 140 that include unit items 141 and 142.

The first item 110 and the second item 120 are associated with the unit items 140. In the example of FIG. 2, the unit items 141 and 142 are provided as the unit items 140. The first item 110 and the second item 120 are associated with the unit item 141. The first item 110 is tied to a system simulation model related to a unit of the unit items 140. The system simulation model includes a relationship between input and output related to the specifications (the functions) of the specification items 130 for the unit.

The second item 120 is tied to a three-dimensional model related to a unit of the unit items 140. The three-dimensional model includes a specific three-dimensional configuration of the unit and simulation data that uses the three-dimensional configuration.

In the graph structure, each of the multiple specification items 130 are associated with one or more of the unit items 140 via one or more of the part items 150. One unit item 140 may be associated with multiple specification items 130. One specification item 130 may be associated with multiple unit items 140. The first item 110 and the second item 120 are associated with one or more of the unit items 140.

The editing device 20 is used to edit graph structures such as that shown in FIG. 2. The editing device 20 causes a display device such as a monitor, a projector, etc., to display a first user interface (UI) 100 shown in FIG. 2. The first UI 100 includes a window 100a. The window 100a includes an editing region 100b. The user uses an input device such as a mouse, a keyboard, etc., to arrange nodes on the editing region 100b and connect the nodes to each other with edges. Thereby, the graph structure is edited in the editing region 100b. Knowledge, information, problems, necessary specifications, etc., of the product are easily and systematically understood by generating the graph structure.

The graph structure 101 shown in FIG. 2 shows that a unit A includes a heat-generating part, a substrate, and a heat sink, and that the unit A is associated with the heat dissipation specifications. Also, the graph structure 101 shows that the system simulation model and the three-dimensional model are registered as models related to the unit A. By referring to the graph structure 101, the user can easily understand the relationships of the product, the units, the parts, the specifications, and the models related to the units.

Software for drawing a Mind Map (registered trademark) can be utilized to draw the graph structure. For example, the function of attaching data to the items described below is added to open source software such as FreeMind, XMind, etc. A graph structure to which the functions of the design support device 10 are applicable can be drawn by using such software.

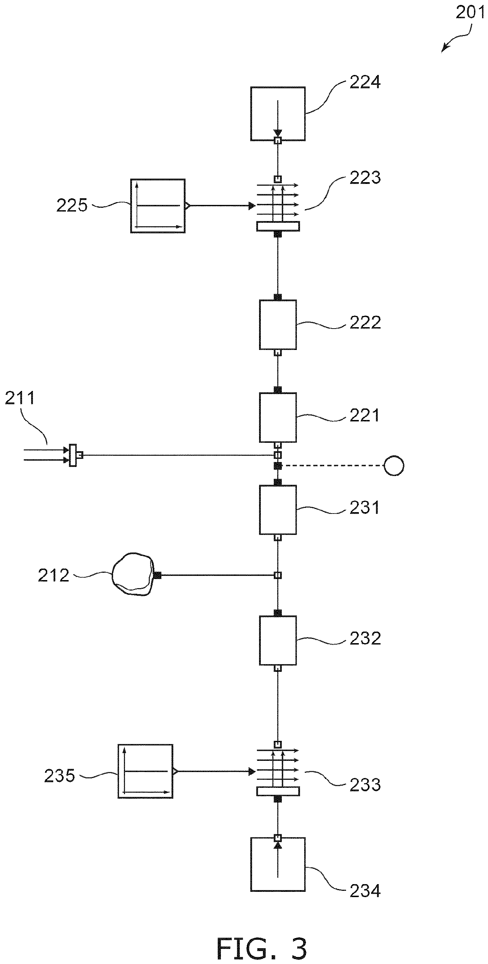

FIG. 3 is an example of a system simulation model.

The system simulation model 201 of FIG. 3 visually represents the heat dissipation mechanism of the unit A. The system simulation model 201 includes multiple components 211, 212, 221 to 225, and 231 to 235. Corresponding physical formulas are preset for the components. A model is generated by linking the multiple components to each other; and the model is converted into formulas when performing the simulation. For example, OpenModelica is used to generate the system simulation model 201.

The component 211 represents the heat flux flowing in the unit A. The component 211 corresponds to the input of heat to the unit A. The component 212 represents the heat capacity of the substrate. The component 221 represents the thermal conduction at the upper side of the heat-generating part. The component 222 represents the thermal conduction of the heat sink. The component 223 represents the heat transfer between the heat sink and the external air. In other words, the component 223 represents the heat dissipation from the heat sink to the external air. The component 224 represents the external air temperature at the periphery of the heat sink. The component 225 represents the heat transfer coefficient between the heat sink and the external air that is input to the component 223. The component 231 represents the thermal conduction at the lower side of the heat-generating part. The component 232 represents the thermal conduction of the substrate. The component 233 represents the heat transfer between the substrate and the external air. In other words, the component 233 represents the heat dissipation from the substrate to the external air. The component 234 represents the external air temperature at the substrate periphery. The component 235 represents the heat transfer coefficient between the substrate and the external air that is input to the component 233. The system simulation model is converted into equations in the simulation. A solver solves the equations and outputs a response for the inputs.

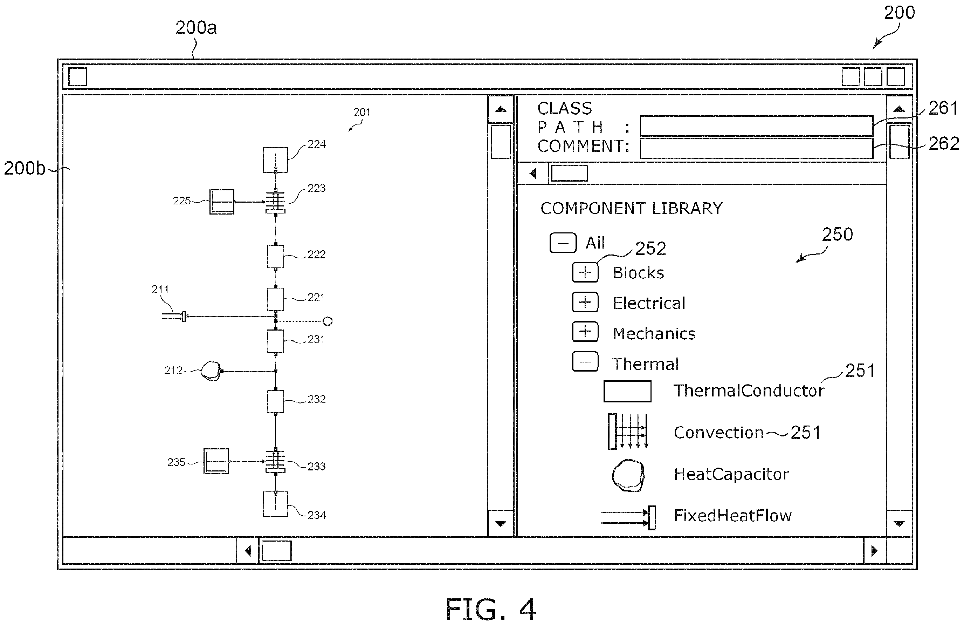

FIG. 4 is a schematic view illustrating a second user interface.

The system simulation model shown in FIG. 3 can be drawn on the user interface by using the editing device 20. For example, a second UI 200 shown in FIG. 4 is displayed when the user double-clicks the first item 110 in the first UI 100 shown in FIG. 2. The second UI 200 includes a window 200a. The window 200a includes an editing region 200b. The user draws the system simulation model in the editing region 200b by using an input device such as a mouse, a keyboard, etc.

The window 200a also may include a component library 250. The component library 250 includes multiple components 251 that can be used in the system simulation model. As an example, the components are classified as the categories of machine component, electrical component, thermal component, etc. The multiple components that are classified as the categories can be opened or closed by the user clicking icons 252. The user also can register a path 261 of the system simulation model 201, a comment 262 related to the system simulation model 201, etc., in the window 200a.

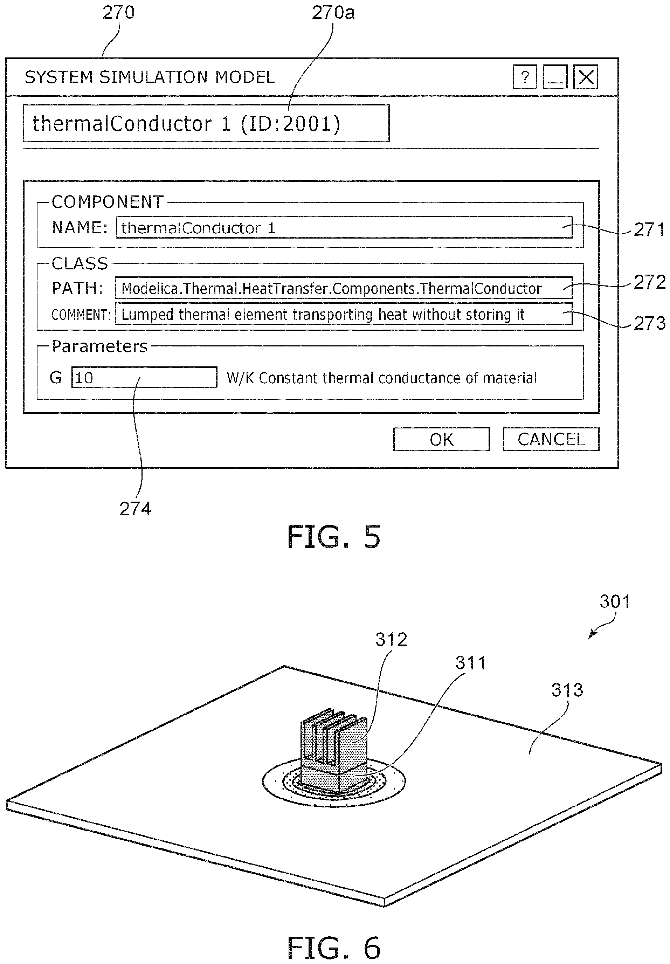

FIG. 5 is a schematic view illustrating data attached to the first item.

FIG. 5 illustrates the data input to the first item 110. For example, a window 270 shown in FIG. 5 is displayed when a component included in the system simulation model 201 is double-clicked in the window 200a. The window 270 is displayed for inputting data to the first item 110.

As shown in FIG. 5, the window 270 displays identification data 270a and input fields 271 to 274. The identification data 270a is a character string for identifying the first item 110 and is automatically assigned by the design support device 10. The name of the first item 110 (the system simulation model) is input to the input field 271. The path of the filename and location where the system simulation model is stored are input to the input field 272. A user comment related to the system simulation model is input to the input field 273. For example, a memo of modifications of the system simulation model, etc., when updating the system simulation model is input. A parameter of the system simulation model is input to the input field 274. In the example, the parameter is a thermal conductance G. The first item 110 and the specified system simulation model are tied to each other by inputting the path of the system simulation model to the input field 272.

FIG. 6 is an example of a three-dimensional model.

The three-dimensional model 301 of FIG. 6 shows the three-dimensional configuration of the unit A and the detailed distribution of the heat of the unit A. The three-dimensional model 301 includes a heat-generating part 311, a heat sink 312, and a substrate 313. For example, the three-dimensional model 301 is generated using computer-aided design (CAD) and computer-aided engineering (CAE).

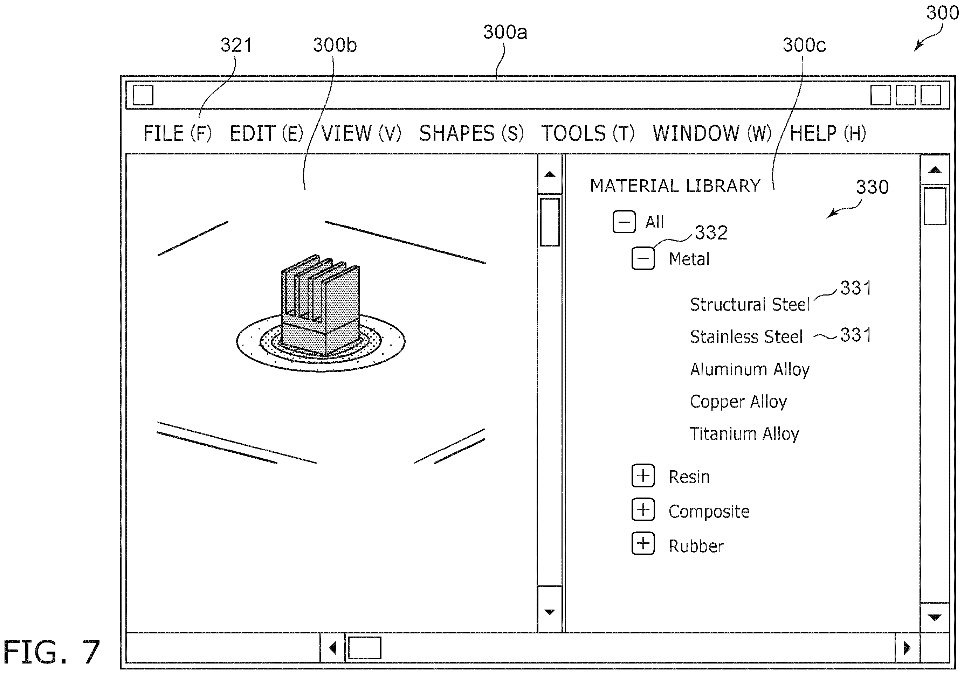

FIG. 7 is a schematic view illustrating a third user interface.

The three-dimensional model shown in FIG. 6 can be edited in the user interface by using the editing device 20. For example, a third UI 300 shown in FIG. 7 is displayed when the user double-clicks the second item 120 in the first UI 100 shown in FIG. 2. The third UI 300 includes a window 300a. The window 300a includes display regions 300b and 300c. The user uses an input device such as a mouse, a keyboard, etc., to display the three-dimensional model in the display region 300b.

The three-dimensional model displayed in the display region 300b is determined by specifying the object three-dimensional model by using a "file" icon 321. Other than the three-dimensional model, three-dimensional simulation results may be displayable in the display region 300b.

The display region 300c displays a material library 330. The material library 330 includes multiple materials 331 that can be used in the three-dimensional model. As an example, the materials are classified as the categories of metal, resin, composite, rubber, etc. The multiple materials that are classified as the categories can be opened or closed by the user clicking icons 332. When a part is selected, the part can be set as a part of the three-dimensional model. The user also may be able to register the path of the three-dimensional model, comments related to the three-dimensional model, etc., in the window 300a.

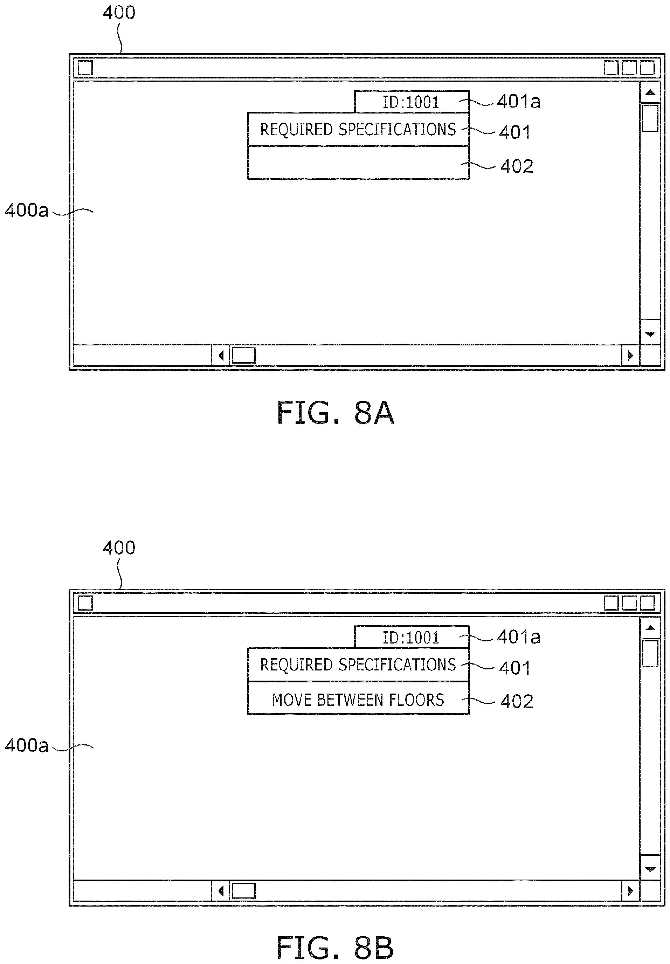

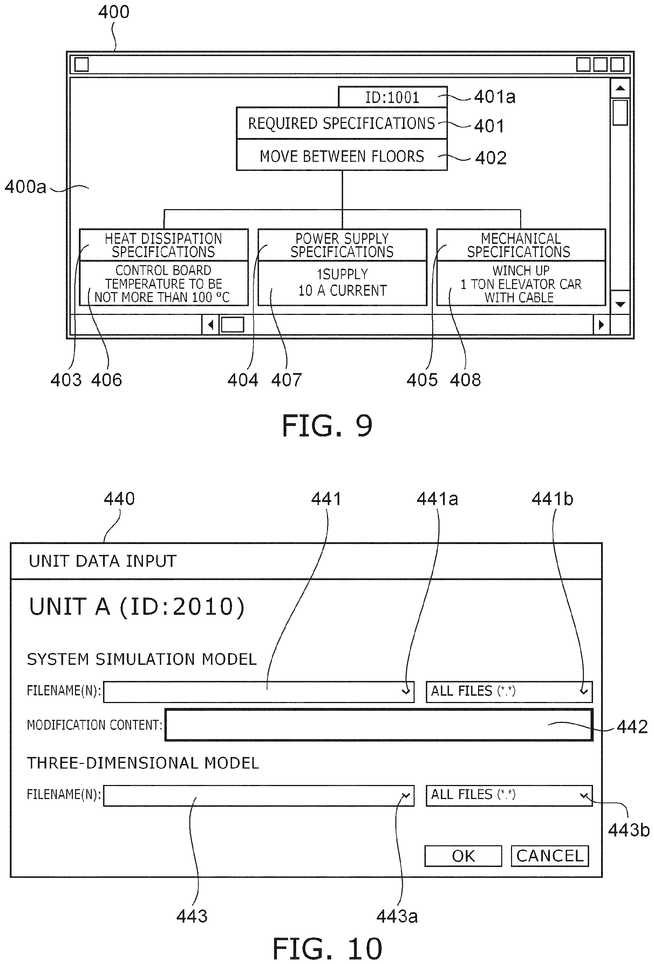

FIG. 8A, FIG. 8B, and FIG. 9 are schematic views illustrating data attached to the specification items.

The user can input data to the items in the first UI 100. FIG. 8A illustrates the data input to the specification item 130. In the example, the product is an elevator. For example, a window 400 for inputting the data to the specification item 130a is displayed when the user double-clicks the specification item 130a in the window 100a shown in FIG. 2.

The window 400 includes an editing region 400a. The editing region 400a displays a specification item 401 corresponding to the specification item 130a, identification data 401a of the specification item 130a, and an input field 402 that is next to the specification item 401. The identification data 401a is assigned by the editing device 20. As shown in FIG. 8B, the user inputs detailed specifications related to the specification item 401 in the input field 402. In the window 400 as shown in FIG. 9, the user also can add other specification items 403 to 405 to concretize the specifications of the specification item 401 and can input specific specifications to input fields 406 to 408. When the specifications are concretized in the graph structure as in the example shown in FIG. 2, the task of concretizing the specifications in the window 400 is unnecessary. The user can double-click any of the specification items 131 to 133 and input detailed specifications for the selected specification item.

In the example described above, the windows 400, 410, and 420 may be displayed in the window 100a or may be displayed separately from the window 100a.

FIG. 10 is a schematic view illustrating data attached to the unit item.

As an example other than FIGS. 4 and 7, the tie between the first item 110 and the simulation model and the tie between the second item 120 and the three-dimensional model may be provided by inputting data to the unit item. For example, a window 440 for inputting data to the unit item 140 is displayed when the unit item 140 is double-clicked in the window 100a. As shown in FIG. 10, the window 440 includes input fields 441 to 443. The path of the system simulation model tied to the first item 110 is input to the input field 441. A user comment related to the system simulation model is input to the input field 442. For example, the user can input the content of the modification when the simulation model is updated. The path of the three-dimensional model tied to the second item 120 is input to the input field 443.

A pull-down menu is displayed when an icon 441a or 443a is clicked. The pull-down menu may be used to input to the input field 441 or 443. Also, a pull-down menu for displaying only specific types of files is displayed when an icon 441b or 443b is clicked.

The design support system 1 further includes a first processing device 31 and a second processing device 32. The first processing device 31 is tied to the first item 110. For example, the first processing device 31 manages the system simulation model. A system simulation model that is generated by a terminal device of the user is uploaded to the first processing device 31. Or, the terminal device of the user may access the first processing device 31 via a network and use the first processing device 31 to generate, update, and store the system simulation model.

The second processing device 32 is tied to the second item 120. For example, the second processing device 32 manages the three-dimensional model. A three-dimensional model that is generated by the terminal device of the user is uploaded to the second processing device 32. Or, the terminal device of the user may access the second processing device 32 via a network and use the second processing device 32 to generate, update, and store the three-dimensional model.

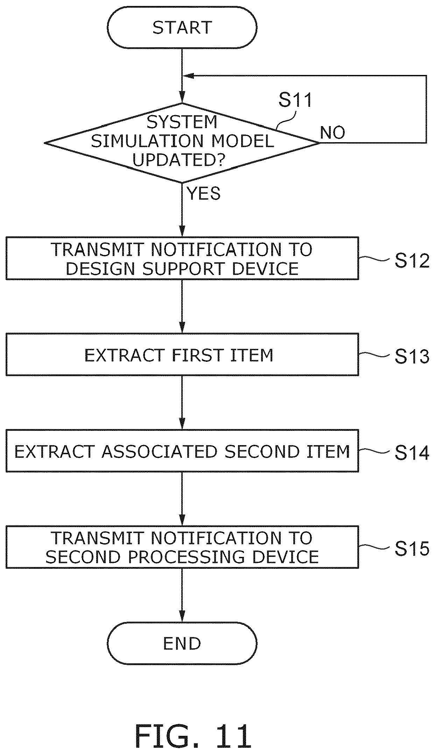

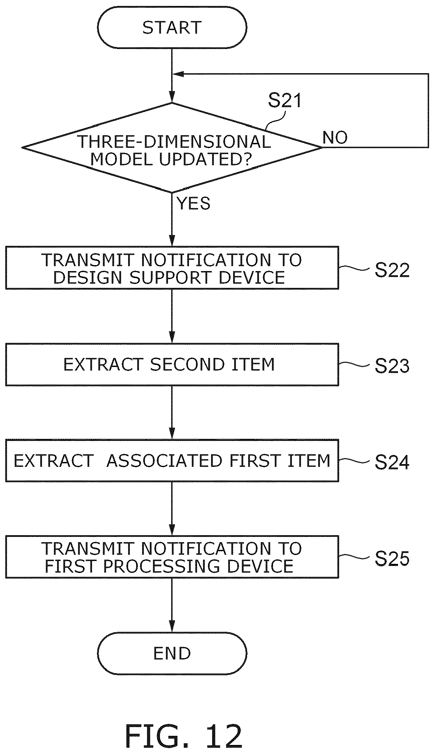

FIGS. 11 and 12 are flowcharts showing processing according to the design support system according to the embodiment.

As shown in FIG. 11, the first processing device 31 determines whether or not the system simulation model is updated (step S11). When the system simulation model is updated, the first processing device 31 transmits a notification (a third notification) of the update of the system simulation model to the design support device 10 (step S12). When the design support device 10 receives the notification, the design support device 10 extracts the first item 110 tied to the updated simulation model from the graph structure 101 (step S13). The design support device 10 extracts the second item 120 associated with the extracted first item 110 (step S14). In the example of FIG. 2, the first item 110 and the second item 120 are subordinate to a common unit item 140. The second item 120 is associated with the first item 110 via the unit item 140. The first item 110 and the second item 120 may be directly associated with each other. The design support device 10 transmits a notification (a second notification) to the second processing device 32 tied to the extracted second item 120 (step S15).

As shown in FIG. 12, the second processing device 32 determines whether or not the three-dimensional model is updated (step S21). When the three-dimensional model is updated, the second processing device 32 transmits a notification (a fourth notification) of the update of the three-dimensional model to the design support device 10 (step S22). When the design support device 10 receives the notification, the design support device 10 extracts the second item 120 tied to the updated three-dimensional model from the graph structure 101 (step S23). The design support device 10 extracts the first item 110 associated with the extracted second item 120 (step S24). The design support device 10 transmits a notification (a first notification) to the first processing device 31 tied to the extracted first item 110 (step S25).

Advantages of the embodiment will now be described.

As shown in the graph structure 101 of FIG. 2, there are cases where specific configurations of parts, units, etc., are designed based on abstract requirements. Such top-down design can reduce costs and reduce the period necessary for the design.

There are cases where a three-dimensional model is updated due to another constraint after the three-dimensional model has been generated according to the system simulation model. Or, there are cases where a system simulation model is updated due to a correction of the requirements, etc., after the three-dimensional model is generated. When one of the system simulation model or the three-dimensional model is updated, it is desirable to also update the other of the system simulation model or the three-dimensional model according to the update. If the update of the one of the system simulation model or the three-dimensional model is not reflected in the other, it may be unclear whether or not the final product satisfies the requirements. When the product does not satisfy the requirements, it is necessary to redesign the system simulation model or the three-dimensional model. Such a redesign may increase the design period, increase the design cost, etc.

For this problem, the design support device 10 according to the embodiment transmits a notification to at least one of the first processing device 31 or the second processing device 32 when the system simulation model or the three-dimensional model is updated. When one of the system simulation model or the three-dimensional model is updated, the notification can prompt the user that manages the other of the system simulation model or the three-dimensional model to check the update of the one, to update the other, to check the necessity of updating the other, etc. The design support device 10 according to the embodiment can support the user so that the design work smoothly proceeds.

The design support system 1 may further include a third processing device 33, a fourth processing device 34, a fifth processing device 35, and a sixth processing device 36. The third processing device 33 is tied to the specification item 130. The fourth processing device 34 is tied to the unit item 140. The fifth processing device 35 is tied to the part item 150. The sixth processing device 36 is tied to the product item 160. For example, the user can specify the processing device tied to each item in the first UI 100.

When the system simulation model or the three-dimensional model is updated, a notification may be transmitted to at least one of the third to sixth processing devices 33 to 36. Also, a notification may be transmitted to at least one of the first to sixth processing devices 31 to 36 when data attached to the specification item 130 is updated in the first UI 100. As shown in FIG. 8A, FIG. 8B, and FIG. 9, specific specifications (requirements) are input to the specification items 130. An update of a specification may affect all of the parts, units, and products. The notification can prompt users related to the items to check the update of the specification.

When one model is updated, it is favorable to transmit a notification to only processing devices tied to models that have a high association with the updated model. In the example shown in FIG. 2, when the three-dimensional model related to the unit A is updated, it is favorable to transmit a notification to the first processing device 31 tied to the system simulation model related to the unit A. Notifications are not transmitted to the first and second processing devices 31 and 32 that are respectively tied to the three-dimensional model and the system simulation model related to a unit B. The frequency of notifications corresponding to model updates can be reduced thereby. For example, the transmission of useless notifications can be avoided.

Specifically, when a three-dimensional model that is tied to one of the multiple second items 120 is updated, the design support device 10 extracts one of the multiple first items 110 that is associated with the one of the multiple second items 120. The design support device 10 prompts a check of the system simulation model by transmitting a notification to the first processing device 31 tied to the extracted first item 110.

For example, the design support device 10 receives a notification that the three-dimensional model related to the unit A is updated from the second processing device 32. The design support device 10 extracts the second item 120 tied to the three-dimensional model from the graph structure 101. The design support device 10 extracts the first item 110 associated with the extracted second item 120 in the graph structure 101. The design support device 10 transmits a notification to the first processing device 31 tied to the extracted first item 110. Thereby, a notification is transmitted to the first processing device 31 that manages the system simulation model related to the unit A.

When a system simulation model that is tied to one of the multiple first items 110 is updated, the design support device 10 extracts one of the multiple second items 120 tied to the one of the multiple first items 110. The design support device 10 transmits a notification to the second processing device 32 tied to the extracted one of the multiple second items 120.

For example, the design support device 10 receives a notification that the system simulation model related to the unit A is updated from the first processing device 31. The design support device 10 extracts the first item 110 tied to the system simulation model from the graph structure 101. The design support device 10 extracts the second item 120 associated with the extracted first item 110 in the graph structure 101. The design support device 10 transmits a notification to the second processing device 32 tied to the extracted second item 120. Thereby, a notification is transmitted to the second processing device 32 that manages the three-dimensional model related to the unit A.

When designing, simulations are performed using models. For example, the first processing device 31 uses the system simulation model to perform a simulation. The second processing device 32 uses the three-dimensional model to perform a simulation. Devices that perform the simulations may be prepared separately from devices that manage the models.

The design support device 10 may transmit a notification when a three-dimensional model is updated and a simulation that uses the three-dimensional model is performed. For example, when performing a simulation, the second processing device 32 determines whether or not the three-dimensional model has been updated since the previous simulation was performed. Put simply, the second processing device 32 may determine that the three-dimensional model has been updated since the previous simulation was performed if the update time and date of the three-dimensional model is later than the execution time and date of the previous simulation.

When the three-dimensional model has been updated since the previous simulation was performed, the second processing device 32 transmits a notification to the design support device 10 that the three-dimensional model has been updated. In response to the notification, the design support device 10 transmits a notification to the first processing device 31. Or, the second processing device 32 transmits notifications to the design support device 10 when the simulation is performed and when the three-dimensional model is updated. The design support device 10 transmits a notification to the first processing device 31 upon receiving both of the notifications.

The design support device 10 may transmit a notification when a system simulation model is updated and a simulation that uses the system simulation model is performed. For example, when performing the simulation, the first processing device 31 determines whether or not the system simulation model has been updated since the previous simulation was performed. Put simply, the first processing device 31 may determine that the system simulation model has been updated since the previous simulation was performed when the update time and date of the system simulation model is later than the execution time and date of the previous simulation.

When the system simulation model has been updated since the previous simulation was performed, the first processing device 31 transmits a notification to the design support device 10 that the system simulation model has been updated. In response to the notification, the design support device 10 transmits a notification to the second processing device 32. Or, the first processing device 31 transmits notifications to the design support device 10 when the simulation is performed and when the system simulation model has been updated. The design support device 10 transmits a notification to the second processing device 32 upon receiving both of the notifications.

If overwriting or regular backups are performed while the system simulation model and the three-dimensional model are being edited, there is a possibility that updates may be performed at a high frequency. The notification frequency may be excessive if a notification is transmitted each time these updates are performed. Too many notifications may be ignored, and the effectiveness of the notifications may be lost.

The simulation is performed after the model is substantially updated. By transmitting the notification in response to the simulation being performed, the notification can be transmitted to match the substantial update of the model; and notifications that are too frequent can be suppressed. The effectiveness of the notifications can be increased.

The design support device 10 may determine whether or not a notification of an update of a three-dimensional model or a notification of an update of a system simulation model has been received every prescribed period. For example, the period is set to three hours, one day, etc. In such a case as well, notifications that are too frequent can be suppressed.

The design support device 10 may transmit a notification that includes data of characteristics of the updated model. For example, the first processing device 31 transmits data of the characteristics of the updated system simulation model together with the notification to the design support device 10. The design support device 10 transmits the notification together with the received data of the characteristics to the second processing device 32. The second processing device 32 transmits data of the characteristics of the updated three-dimensional model together with the notification to the design support device 10. The design support device 10 transmits the received data of the characteristics together with the notification to the first processing device 31. For example, the data of the characteristics is the input values and the output values of the model. The data of the characteristics may be a change amount or a change ratio of an output value of the updated model with respect to an output value of a previous model.

The design support system 1 may be configured to perform recovery processing. In recovery processing, when a system simulation model is returned to a state before the modification, the three-dimensional model that corresponds to the system simulation model also can be returned to its state before the modification. For example, a system simulation model or a three-dimensional model other than the database tied to the graph structure is stored in the memory device 25. Such data includes the storage timing and an identification data assigned by the design support device 10.

First, when a system simulation model is updated, the first processing device 31 searches for a previous system simulation model stored in the memory device 25. When a previous system simulation model that corresponds to the updated system simulation model is found, the first processing device 31 notifies the design support device 10 of the time and date that the previous system simulation model was stored. For example, the correspondence between the system simulation models is discriminated based on the identification data. The previous system simulation model is discriminated to correspond to the updated system simulation model when the identification data assigned to the previous system simulation model is the same as the identification data assigned to the updated system simulation model.

When receiving the notification, the design support device 10 transmits the time and date of the notification to the second processing device 32. When receiving the time and date, the second processing device 32 searches for a three-dimensional model stored at the notified time and date. When a three-dimensional model that was stored at the time and date exists, the current three-dimensional model is replaced with the previous three-dimensional model that was found. At this time, a warning screen that prompts the user to confirm the replacement may be displayed.

According to the recovery processing, when the updated system simulation model is the same as the previous system simulation model, the three-dimensional model also is automatically restored to the previous three-dimensional model. It is unnecessary for the user to update the three-dimensional model according to the update of the system simulation model.

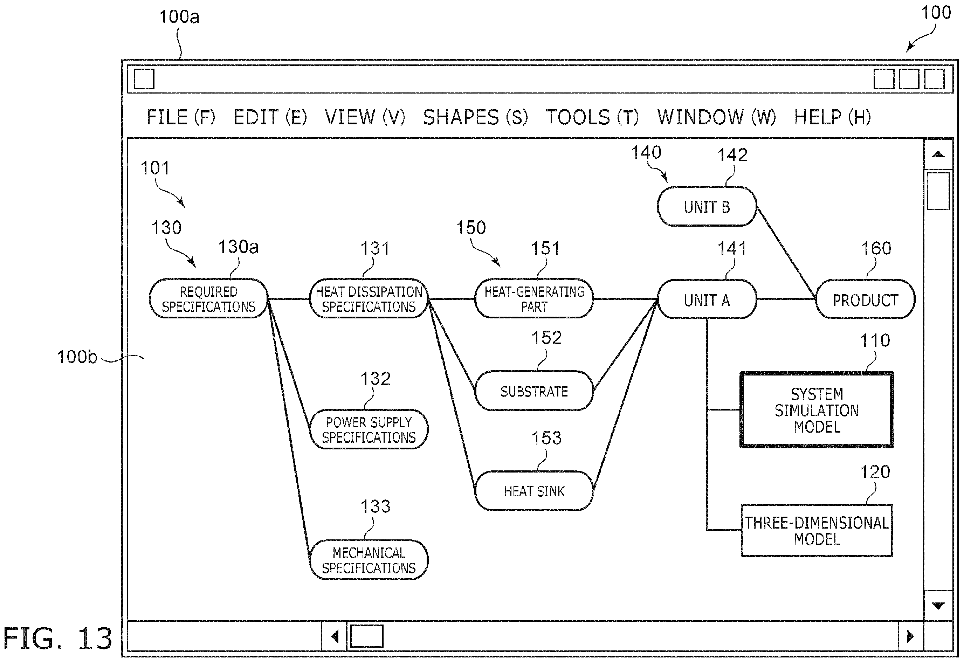

FIG. 13 is a schematic view illustrating the user interface.

When a notification is transmitted to the first processing device 31, for example, the design support device 10 may cause the display form of the first item tied to the first processing device 31 to be different from the display form of the other items as shown in FIG. 13. Similarly, when a notification is transmitted to the second processing device 32, the design support device 10 may cause the display form of the second item tied to the second processing device 32 to be different from the display form of the other items. A different display form may be the design of the frame of the item such as the thickness, the size, the color, the line type, or the like, or the format of the characters of the name of the item such as the boldness, the size, the color, the formatting, etc. Thereby, the user can easily ascertain the object of the notification that was transmitted.

The design support device 10 may transmit notifications to the first to sixth processing devices 31 to 36 in the case of an addition of the specification item 130, a deletion of the specification item 130, an addition of the part item 150, or a deletion of the part item 150. This is because an addition or a deletion of the specification item 130 or the part item 150 may affect at least one of the system simulation model or the three-dimensional model.

The three-dimensional model may be a combination of configuration data of the three-dimensional configuration of the unit and simulation data according to the three-dimensional configuration, or the configuration data and the simulation data may be separately prepared. For example, the configuration data is generated using CAD. The simulation data includes the conditions of the simulation, the physical property values (the thermal conductivity, the density, and the specific heat) of the parts, initial values, boundary conditions, etc.

For example, the second processing device 32 manages only the configuration data of the three-dimensional configuration. Another processing device manages the simulation data according to the three-dimensional configuration. The update of one of the configuration data or the simulation data corresponds to an update of the three-dimensional model. The first processing device 31 transmits a notification to the design support device 10 when the configuration data is updated. The other processing device transmits a notification to the design support device 10 when the simulation data is updated.

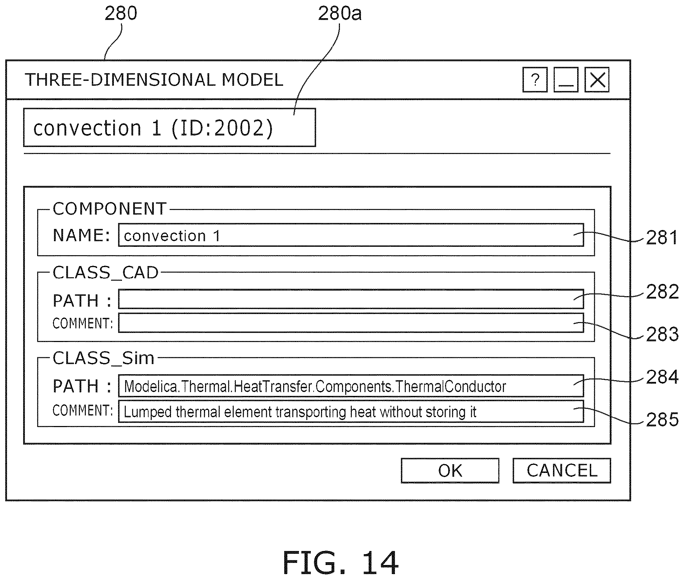

FIG. 14 is a schematic view illustrating data attached to the second item.

A window 280 shown in FIG. 14 displays identification data 280a and input fields 281 to 283 that correspond to the identification data 270a and the input fields 271 to 273. Compared to the example shown in FIG. 5, input fields 284 and 285 also are displayed in the window 280. A path and a comment related to the configuration data are input respectively to the input fields 282 and 283. A path and a comment related to the simulation data are input respectively to the input fields 284 and 285.

Only one of the configuration data or the simulation data may be tied to the second item 120. This is because, for example, the simulation data may not be ready in the initial design of the three-dimensional configuration. In such a case, the design support device 10 may consider the registration of the other of the configuration data or the simulation data to be an update of the three-dimensional model and may transmit a notification to the first processing device 31.

When the three-dimensional model is updated, the first processing device 31 may update the system simulation model based on the input-output characteristics of the updated three-dimensional model. For example, the second processing device 32 acquires multiple input values and multiple output values of the updated three-dimensional model. The second processing device 32 transmits a table including the input values and the output values together with the notification to the design support device 10. The design support device 10 transmits the table together with the notification to the first processing device 31. The first processing device 31 modifies the parameters included in the system simulation model to better match the received input-output characteristics. Or, the second processing device 32 may use regression analysis, etc., to calculate a formula for describing the received input-output characteristics. The second processing device 32 transmits the formula together with the notification to the design support device 10. The first processing device 31 updates the system simulation model by replacing the existing system simulation model with the system simulation model of the calculated formula. The burden of the user can be reduced by the system simulation model being automatically updated according to the update of the three-dimensional model.

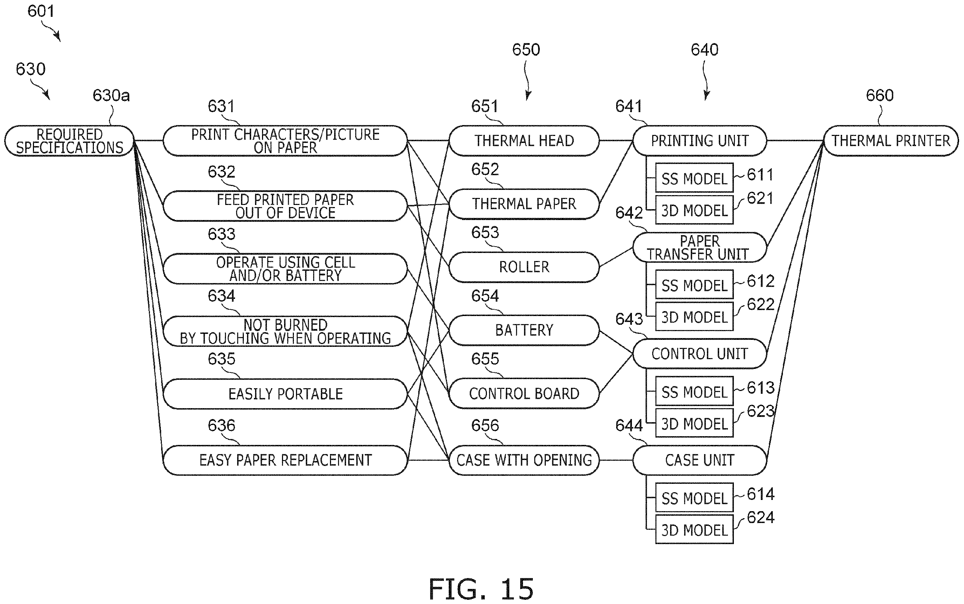

FIG. 15 is a schematic view showing a specific example of a graph structure.

FIG. 15 shows the graph structure 601 related to a thermal printer. The graph structure 601 includes specification items 630, unit items 640, part items 650, and a product item 660. The product item 660 shows that the product that is the object of the graph structure 601 is a thermal printer. The specification items 630 include specifications of the thermal printer. The specifications are, for example, functions, performance, configurations, prices, standards, etc. In the example, the multiple specification items 630 include specification items 630a and 631 to 636. The unit items 640 include units included in the thermal printer. In the example, the multiple unit items 640 include unit items 641 to 644. The part items 650 include parts included in the units. In the example, the multiple part items 650 include part items 651 to 656. Each unit item 640 is associated with at least one of the specification items 630 via at least one of the part items 650.

Multiple first items 611 to 614 are associated respectively with the multiple unit items 641 to 644. Also, multiple second items 621 to 624 are associated respectively with the multiple unit items 641 to 644. The first items 611 to 614 are tied to system simulation models (SS models) related to the units of the unit items 641 to 644. The second items 621 to 624 are tied to three-dimensional models (3D models) related to the units of the unit items 641 to 644.

For example, in the graph structure 601, the first notification is transmitted to the first processing device 31 tied to the first item 612 when the three-dimensional model tied to the second item 622 is updated. The second notification is transmitted to the second processing device tied to the second item 622 when the system simulation model tied to the first item 612 is updated. The user can be prompted to check or update one model of the unit of the unit item 642 according to the update of the other model.

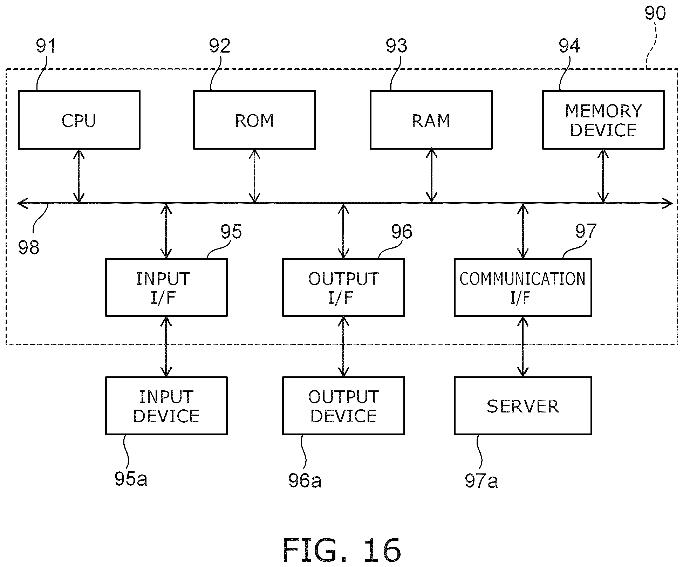

FIG. 16 is a schematic view showing a hardware configuration.

The design support device 10, the editing device 20, and the first to sixth processing devices 31 to 36 each include, for example, the configuration of a computer 90 shown in FIG. 16. The computer 90 includes a CPU 91, ROM 92, RAM 93, a memory device 94, an input interface 95, an output interface 96, and a communication interface 97.

The ROM 92 stores programs that control the operations of the computer 90. Programs that are necessary for causing the computer 90 to realize the processing described above are stored in the ROM 92. The RAM 93 functions as a memory region into which the programs stored in the ROM 92 are loaded.

The CPU 91 includes a processing circuit. The CPU 91 uses the RAM 93 as work memory to execute the programs stored in at least one of the ROM 92 or the memory device 94. When executing the programs, the CPU 91 executes various processing by controlling configurations via a system bus 98.

The memory device 94 stores data necessary for executing the programs and/or data obtained by executing the programs.

The input interface (I/F) 95 connects the computer 90 and an input device 95a. The input I/F 95 is, for example, a serial bus interface such as USB, etc. The CPU 91 can read various data from the input device 95a via the input I/F 95.

The output interface (I/F) 96 connects the computer 90 and an output device 96a. The output I/F 96 is, for example, an image output interface such as Digital Visual Interface (DVI), High-Definition Multimedia Interface (HDMI (registered trademark)), etc. The CPU 91 can transmit the data to the output device 96a via the output I/F 96 and cause the output device 96a to display an image.

The communication interface (I/F) 97 connects the computer 90 and a server 97a that is outside the computer 90. The communication I/F 97 is, for example, a network card such as a LAN card, etc. The CPU 91 can read various data from the server 97a via the communication I/F 97.

The memory device 94 includes at least one selected from a hard disk drive (HDD) and a solid state drive (SSD). The input device 95a includes at least one selected from a mouse, a keyboard, a microphone (audio input), and a touchpad. The output device 96a includes at least one selected from a monitor and a projector. A device such as a touch panel that functions as both the input device 95a and the output device 96a may be used.

The functions of the design support device 10, the editing device 20, and the first to sixth processing devices 31 to 36 may be realized by the collaboration of three or more computers. The functions of at least two of the design support device 10, the editing device 20, the first processing device 31, or the second processing device 32 may be realized by one computer.

The processing of the various data described above may be recorded, as a program that can be executed by a computer, in a magnetic disk (a flexible disk, a hard disk, etc.), an optical disk (CD-ROM, CD-R, CD-RW, DVD-ROM, DVD±R, DVD±RW, etc.), semiconductor memory, or a recording medium (a non-transitory computer-readable storage medium) that can be read by another nontemporary computer.

For example, information that is recorded in the recording medium can be read by a computer (or an embedded system). The recording format (the storage format) of the recording medium is arbitrary. For example, the computer reads the program from the recording medium and causes the CPU to execute the instructions recited in the program based on the program. In the computer, the acquisition (or the reading) of the program may be performed via a network.

According to the design support device, the design support system, or the design support method described above, the user can be supported so that design work smoothly proceeds. Similar effects can be obtained by using a program to cause a computer to execute the design support method.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention. Moreover, above-mentioned embodiments can be combined mutually and can be carried out.

## Claims

1. A design support device (10),
the design support device referring to a database,
the database storing a graph structure (101),
the graph structure including
a specification item (130) of a specification of a product,
a unit item (140) of a unit included in the product, the unit item being associated with the specification item,
a first item (110) tied to a system simulation model and associated with the unit item, the system simulation model including a relationship between input and output of the unit, and
a second item (120) tied to a three-dimensional model and associated with the unit item and the first item, the three-dimensional model including a three-dimensional configuration of the unit,
the design support device transmitting a first notification to a first processing device (31) when the three-dimensional model is updated, the first processing device being tied to the first item,
the design support device transmitting a second notification to a second processing device (32) when the system simulation model is updated, the second processing device being tied to the second item.

2. The design support device (10) according to claim 1, wherein
a plurality of the unit items (140) is associated with the specification item in the graph structure (101),
a plurality of the first items (110) is associated respectively with the plurality of unit items in the graph structure,
a plurality of the second items (120) is associated respectively with the plurality of unit items in the graph structure, and
when the three-dimensional model that is tied to one of the plurality of second items is updated, the design support device:
extracts one of the plurality of first items associated with the one of the plurality of second items; and
transmits the first notification to the first processing device (31) tied to the extracted one of the plurality of first items.

3. The design support device (10) according to claim 1 or 2, wherein
a plurality of the unit items (140) is associated with the specification item in the graph structure (101),
a plurality of the first items (110) is associated respectively with the plurality of unit items in the graph structure,
a plurality of the second items (120) is associated respectively with the plurality of unit items in the graph structure, and
when the system simulation model that is tied to one of the plurality of first items is updated, the design support device:
extracts one of the plurality of second items tied to the one of the plurality of first items; and
transmits the second notification to the second processing device (32) tied to the extracted one of the plurality of second items.

4. The design support device (10) according to any one of claims 1 to 3, wherein
after a previous transmission of the first notification, the design support device performs a next transmission of the first notification when
the three-dimensional model is updated and a simulation that uses the three-dimensional model is performed, or
the three-dimensional model is updated and a prescribed period has elapsed from the previous transmission of the first notification.

5. The design support device (10) according to any one of claims 1 to 4, wherein
the first notification includes data of a characteristic of the updated three-dimensional model.

6. The design support device (10) according to any one of claims 1 to 5, wherein
the design support device causes a display device (96a) to display the graph structure (101),
after the transmission of the first notification, the design support device causes a display form of the first item (110) tied to the first processing device (31) to which the first notification is transmitted to be different from a display form of an other item in the graph structure, and
after the transmission of the second notification, the design support device causes a display form of the second item (120) tied to the second processing device (32) to which the second notification is transmitted to be different from a display form of an other item in the graph structure.

7. The design support device (10) according to any one of claims 1 to 6, wherein
the unit item (140) is associated with the specification item (130) via a part item (150) of a part included in the unit, and
the design support device transmits a notification to the first and second processing devices (31,32) when an addition of the specification item, a deletion of the specification item, an addition of the part item, or a deletion of the part item occurs.

8. A design support system (1), comprising:
the design support device (10) according to any one of claims 1 to 7;
the first processing device (31); and
the second processing device (32).

9. The design support system (1) according to claim 8, wherein
when the system simulation model is updated, the first processing device (31) transmits a third notification to the design support device (10), and the design support device transmits the second notification in response to a reception of the third notification, and
when the three-dimensional model is updated, the second processing device transmits a fourth notification to the design support device, and the design support device transmits the first notification in response to a reception of the fourth notification.

10. The design support system (1) according to claim 8 or 9, wherein
a storage time and date of a previous system simulation model is transmitted to the second processing device (32) when the updated system simulation model corresponds to the previous system simulation model, and
when a previous three-dimensional model is stored at the storage time and date of the previous system simulation model, the second processing device replaces the three-dimensional model with the previous three-dimensional model.

11. The design support system (1) according to any one of claims 8 to 10, wherein
the first processing device (31) refers to the updated three-dimensional model when the three-dimensional model is updated, and
the first processing device corrects a parameter of the system simulation model based on a relationship between input and output of the updated three-dimensional model.

12. A design support method, comprising:
accessing a database,
the database storing a graph structure (101),
the graph structure including
a specification item (130) of a specification of a product,
a unit item (140) of a unit included in the product, the unit item being associated with the specification item,
a first item (110) tied to a system simulation model and associated with the unit item, the system simulation model including a relationship between input and output of the unit, and
a second item (120) tied to a three-dimensional model and associated with the unit item and the first item, the three-dimensional model including a three-dimensional configuration of at least a portion of the product;
transmitting a first notification to the first processing device (31) when the three-dimensional model is updated, the first processing device being tied to the first item; and
transmitting a second notification to a second processing device (32) when the system simulation model is updated, the second processing device being tied to the second item.

13. A program causing a computer to execute the design support method according to claim 12.

14. A storage medium storing a program,
the program causing a computer to execute the design support method according to claim 12.
